# EUROPÄISCHE PATENTSCHRIFT

(11) **EP 1 871 620 B1**
(45) Veröffentlichungstag und Bekanntmachung des Hinweises auf die Patenterteilung: **03.08.2011**
(21) Anmeldenummer: 06724242.0
(22) Anmeldetag: 11.04.2006
(51) Int. Cl.: B44C 1/16, B44C 1/17, B42D 15/00, G02B 27/00

(54) **TRANSFERFOLIE MIT RELIEFSTRUKTURSCHICHT**
TRANSFER FILM
FEUILLE DE TRANSFERT

(30) Priorität: 13.04.2005 DE 102005017170
(43) Veröffentlichungstag der Anmeldung: 02.01.2008
(73) Patentinhaber: OVD Kinegram AG, 6301 Zug (CH)
(72) Erfinder: STAUB, René, CH-6332 Hagendorn (CH); HANSEN, Achim, CH-6300 Zug (CH); ATTNER, Juri, 90559 Burgthann (DE)
(74) Vertreter: Zinsinger, Norbert
(86) Internationale Anmeldenummer: PCT/EP2006/003322
(87) Internationale Veröffentlichungsnummer: WO 2006/108611

(56) Entgegenhaltungen:
- EP-A- 0 064 782
- EP-A- 0 194 042
- EP-A- 1 046 515
- EP-A- 1 182 055
- WO-A-92/00856
- WO-A-03/084764
- DE-A- 2 350 109
- DE-A- 10 054 503
- DE-A- 10 233 831
- DE-A- 10 254 500
- GB-A- 130 551
- GB-A- 2 122 541

## Beschreibung

Die Erfindung betrifft eine Transferfolie, insbesondere Heißprägefolie, die eine Trägerfolie und eine auf der Trägerfolie angeordnete und von der Trägerfolie ablösbare Übertragungslage mit einer Strukturschicht umfasst, ein Verfahren zur Herstellung einer solchen Transferfolie, sowie einen Mehrschichtkörper.

Durch geeignete Oberflächenausbildung kann der Gebrauchswert technischer Objekte erhöht werden, beispielsweise durch Ausbildung mit reflexmindernden oder schmutzabweisenden Oberflächen.

In DE 199 62 641 ist ein Verfahren zur Erzeugung einer selbstreinigenden metallischen Oberfläche beschrieben, wobei jedoch das Verfahren auf metallische Oberflächen beschränkt ist.

Die DE 102 33 831 A1 sieht vor, mittels Coatingverfahren eine härtbare Substanz als Trägerschicht auf die zu schützende Oberfläche aufzubringen, Nanopartikel mittels Coatingverfahren auf die Trägerschicht aufzubringen und durch Härten der Trägerschicht die Partikel zu fixieren. Das Beschichtungsverfahren hat den Nachteil, dass das Beschichtungsergebnis von der Beschaffenheit der Nanopartikel und vom Auftragsverfahren abhängt. Nachteilig ist, dass das Aufbringen der Nanopartikel mit einer Sprühpistole vorgesehen ist und dass sich die Nanopartikel bei Dauergebrauch aus der Trägerschicht lösen können. Zudem ist die toxikologische Wirkung von Nanopartikeln bei Herstellung, Gebrauch und Entsorgung kaum untersucht, was ein Risiko beinhaltet.

Die WO 92/00856 beschreibt eine Transferfolie, welche zur Bildung von haptisch erfassbaren Intaglio-Drucken dient und welche eine Trägerfolie mit einer

Reliefstruktur und eine Übertragungslage mit einer dazu komplementären Reliefstruktur aufweist.

Die EP 1182055 A beschreibt einen optischen Informationsträger in Form eines Schichtverbunds mit einer Trägerfolie, deren Ober- und Unterseite mit mikroskopisch feinen Reliefstrukturen versehen ist.

Der Erfindung liegt nun die Aufgabe zugrunde, eine Transferfolie und ein kostengünstiges und für die Massenproduktion geeignetes Verfahren zur Ausbildung eines Mehrschichtkörpers mit einer äußeren Strukturschicht anzugeben, sowie einen mit diesem Verfahren hergestellten Mehrschichtkörper.

Die Aufgabe der Erfindung wird mit einer Transferfolie, insbesondere Heißprägefolie, gelöst, die eine Trägerfolie und eine auf der Trägerfolie angeordnete und von der Trägerfolie ablösbare Übertragungslage mit einer Strukturschicht umfasst, wobei vorgesehen ist, dass auf der Trägerfolie auf ihrer der Strukturschicht zugewandten Seite eine Master-Reliefstruktur abgeformt ist und dass die Strukturschicht auf ihrer der Trägerfolie zugewandten Seite eine zur Master-Reliefstruktur der Trägerfolie komplementäre Reliefstruktur aufweist, wobei die komplementäre Reliefstruktur eine Mikrostruktur umfasst und wobei die Strukturschicht eine Dicke < 20 µm aufweist.

Die Aufgabe wird weiter mit einem Verfahren zur Herstellung einer Transferfolie gelöst, die eine Trägerfolie und eine auf der Trägerfolie angeordnete und von der Trägerfolie ablösbare Übertragungslage mit einer Strukturschicht umfasst, wobei vorgesehen ist, dass in die Trägerfolie eine Master-Reliefstruktur abgeformt wird, dass auf die Trägerfolie die Strukturschicht aufgebracht wird, wobei in die Strukturschicht eine zur Master-Reliefstruktur der Trägerfolie komplementäre Reliefstruktur abgeformt wird, wobei die komplementäre Reliefstruktur eine Mikrostruktur umfasst, und dass die komplementäre Reliefstruktur durch Verfestigung oder Aushärten der Strukturschicht fixiert wird, wobei die Strukturschicht in einer Dicke von < 20 µm ausgebildet wird.

Die Aufgabe wird weiter von einem Mehrschichtkörper mit einer Strukturschicht gelöst, wobei die Strukturschicht eine Vorderseite des Mehrschichtkörpers bildet und mittels der erfindungsgemäßen Transferfolie gebildet ist, wobei in eine die Vorderseite des Mehrschichtkörpers bildende erste Oberfläche der Strukturschicht die komplementäre Reliefstruktur abgeformt ist und wobei die Strukturschicht transparent ist und eine Dicke < 20 µm aufweist.

Durch die Erfindung wird es ermöglicht, Strukturschichten in sehr geringer Schichtdicke auszubilden und mittels der Trägerfolie zu übertragen. Die Trägerfolie mit der Master-Reliefstruktur sorgt dabei für ausreichende mechanische Stabilität und Schutz der Oberflächenstruktur beim Applizieren der Übertragungslage auf eine zu schützende Oberfläche.

Die Dicke der transparenten Strukturschicht kann durch die Erfindung so reduziert werden, dass durch diese, wenn sie auf ein optisches System oder auf ein Display appliziert wird, keine Abbildungsfehler hervorgerufen werden. Durch das erfindungsgemäße Verfahren können auf der Strukturschicht ausgebildete Reliefstrukturen ausschließlich nach funktionellen Kriterien ausgebildet sein. Weiter ist es möglich, in der Praxis bewährte und für eine Massenproduktion geeignete Verfahrensschritte und Vorrichtungen zu verwenden und in einem Rolle-zu-Rolte-Prozess die Strukturschicht auszubilden.

Da die erste Reliefstruktur an der Oberfläche des Mehrschichtkörpers angeordnet ist, kann durch den Mehrschichtkörper ein technischer Oberflächenschutz für empfindliche Oberflächen bereitgestellt werden, vorzugsweise ein Schutz gegen Verschmutzung.

Weitere vorteilhafte Ausbildungen sind in den Unteransprüchen bezeichnet.

Es kann vorgesehen sein, dass die Strukturschicht transparent ausgebildet ist. Es kann sich aber auch um eine opake und/oder farbige Strukturschicht handeln, die beispielsweise die für ein Material typische Oberfläche nachahmt. Dabei kann sowohl die optische als auch die taktile Wirkung des Materials nachgeahmt werden.

In einer vorteilhaften Ausführung ist vorgesehen, dass die Master-Reliefstruktur durch eine Prägung in der Trägerfolie gebildet ist. Es kann aber auch vorgesehen sein, dass die Trägerfolie eine Replizierlack-Schicht aufweist, in die die Master-Reliefstruktur beispielsweise durch thermisches Prägen oder UV-Prägen abgeformt ist.

Es kann vorgesehen sein, dass zwischen der Trägerfolie und der Übertragungslage eine Ablöseschicht angeordnet ist. Eine solche Ablöseschicht kann beispielsweise als Wachsschicht ausgebildet sein, wobei die Dicke der Ablöseschicht bei der Ausbildung der Master-Reliefstruktur zu berücksichtigen ist.

Weiter kann vorgesehen sein, dass auf der ersten Reliefstruktur eine Schutzschicht ausgebildet ist. Vorteilhafterweise kann auch vorgesehen sein, dass die Strukturschicht im Material so gewählt ist, dass sie eine Schutzschicht bildet.

Bei der Reliefstruktur handelt es sich vorzugsweise um eine nicht zufällige Reliefstruktur. Unter einer nicht zufälligen Reliefstruktur wird eine solche verstanden, sie gezielt gebildet wird und nicht aufgrund zufälliger Oberflächenrauhigkeiten von Materialoberflächen auftritt. So sind nicht zufällige Reliefstrukturen insbesondere daran erkennbar, dass diese gezielt reproduzierbar sind.

Wird beispielsweise eine Reliefstruktur mit einer gewünschten Profilform beispielsweise im industriellen Maßstab in einer Endlosträgerfolie erzeugt, so dient dazu üblicherweise ein entsprechend strukturierter Stempel oder Zylinder, welcher eine endliche Länge aufweist. Aufgrund des kontinuierlichen Einsatzes des strukturierten Werkzeugs auf der Endlosträgerfolie wiederholen sich die abgeformten Reliefstrukturen in regelmäßigen Abständen auf der Trägerfolie und sind somit erkennbar nicht zufällige Reliefstrukturen, auch wenn auf den ersten Blick lokal eine zufällige Reliefstruktur vorzuliegen scheint.

Eine nicht zufällige Reliefstruktur ist weiterhin beispielsweise daran erkennbar, dass bestimmte, üblicherweise nicht oder nur sehr selten vorkommende Profilformen gehäuft, periodisch oder quasiperiodisch auftreten. Während von einer zufälligen Reliefstruktur wie einer Oberflächenrauhigkeit eine eher undefinierte und abgerundete Profilform zu erwarten ist, zeigen nicht zufällige Reliefstrukturen beispielsweise exakte und geometrisch ausgebildete Profilformen wie Rechteckprofile, Sägezahnprofile, Halbkugelprofile oder Blazestrukturen. Weiterhin zeigen nicht zufällige Reliefstrukturen beispielsweise Profile mit treppenartig gestaffelter Profiltiefe, mit konstanter Profiltiefe, wie insbesondere die in DE 100 54 503 B4 beschriebenen binären Profil.

Ein Spezialfall für ein treppenartiges Profil ist beispielsweise ein rechteckförmiges Profil, wobei die lokalen Profiltiefen lediglich diskrete Niveaus annehmen können. Die Abstände zwischen zwei benachbarten Vertiefungen liegen dabei bevorzugt im Bereich von 0,5 bis 50 µm. Die Profiltiefe beträgt, bezogen auf ein mittleres Niveau, vorzugsweise < 5µm.

Mikroskopisch feine, nicht zufällige Reliefstrukturen mit lokal variierender Strukturtiefe sind beispielsweise in EP 992 020 B1 offenbart.

Es hat sich bewährt, wenn die komplementäre Reliefstruktur eine Mikrostruktur, deren Abmessungen unterhalb der Auflösungsgrenze des menschlichen Auges liegen, umfasst.

Die komplementäre Reliefstruktur kann generell als Mikrostruktur, deren Abmessungen unterhalb der Auflösungsgrenze des menschlichen Auges liegt, und zusätzlich als Makrostruktur, welche für das menschliche Auge sichtbar ist, ausgebildet sein. Dabei kann eine Makrostruktur neben einer Mikrostruktur vorliegen und/oder von einer Mikrostruktur überlagert ein. Eine Mikrostruktur kann dabei einen optischen Effekt aufweisen, der das Vorhandensein einer Makrostruktur simuliert.

Die komplementäre Reliefstruktur kann als Mattstruktur und/oder als diffraktive Struktur und/oder als refraktive Struktur und/oder als Makrostruktur ausgebildet sein.

Bei der Mattstruktur handelt es sich um eine diffraktive Struktur mit stochastischem Verlauf, so dass einfallendes Licht in zufälliger Weise zerstreut wird. Mattstrukturen besitzen im mikroskopischen Maßstab feine Reliefstrukturelemente, die das Streuvermögen bestimmen und mit statistischen Kenngrößen wie z.B. dem Mittenrauhwert Ra und der Korrelationslänge Ic beschrieben werden können. Bevorzugte Mattstrukturen weisen einen Mittenrauhwert Ra im Bereich von 20 nm bis 2000 nm, vorzugsweise im Bereich von 50 nm bis 500 nm auf. Die Korrelationslänge Ic liegt vorzugsweise im Bereich von 200 nm bis 50000 nm, insbesondere im Bereich von 500 nm bis 10000 nm.

Diffraktive Strukturen sind Strukturen, die auf Lichtbeugung beruhende optische Effekte ausbilden, beispielsweise Beugungsgitter oder Hologramme. Dabei kann es sich um klassische 2D/3D- oder 3D-Hologramme handeln, welche basierend auf einer Oberflächenstruktur die Darstellung dreidimensionaler Informationen erlauben. Lokal betrachtet kann das Profil eines holographisch generierten Hologramms, wie beispielsweise eines Fourier-Hologramms, als näherungsweise periodisch betrachtet werden, wobei typische Linienzahlen im Bereich von 300 bis 2000 I/mm und typische Strukturtiefen im Bereich von 50 bis 800 nm liegen.

Ein computergeneriertes Hologramm, wie beispielsweise das so genannte Kinoform, kann den Eindruck eines stochastischen Oberflächenreliefs erwecken und eine asymmetrische Beugungswirkung aufweisen. Eine typische Strukturtiefe beträgt die Hälfte oder ein Vielfaches der Wellenlänge des einfallenden Lichts und richtet sich danach, ob das Kinoform seine Wirkung in Transmission oder Reflexion entfalten soll.

Bei den refraktiven Strukturen handelt es sich um Strukturen, die auf Lichtbrechung beruhende optische Effekte ausbilden, beispielsweise Mikrolinsen. Derartige Mikrolinsen werden üblicherweise nicht einzeln, sondern in einem regelmäßigen Raster nebeneinander angeordnet verwendet.

Diese Strukturen weisen i.a. Abmessungen auf, die unterhalb der Auflösungsgrenze des menschlichen Auges liegen.

Bei den Makrostrukturen handelt es sich um Strukturen, deren Abmessungen durch das menschliche Auge wahrnehmbar sind, beispielsweise Designelemente, die durch Strukturbereiche gebildet sind.

Solche Makrostrukturen können beispielsweise durch Linsenelemente oder speziell ausgeformte, einen sichtbaren linsenartigen Effekt erzeugende, beugungsoptisch wirksame Reliefstrukturen erzeugt sein, wie insbesondere durch Reliefstrukturen gemäß der DE 102 54 499 B4 oder der DE 102 54 500 B4. Die makroskopisch sichtbare Struktur wird hierbei im wesentlichen mittels mit dem Auge nicht auflösbaren, beugungsoptisch wirksamen Reliefstrukturen simuliert. Weiterhin kann eine Makrostruktur gemäß DE 102 16 561 A1 ausgebildet sein, die eine zumindest stückweise steigende und differenzierbare Funktion ist, wenigstens in Teilbereichen gekrümmt ist und deren benachbarte Extremwerte wenigstens 0,1 mm voneinander entfernt sind.

Von einer Mikrostruktur überlagerte Makrostrukturen sind beispielsweise der WO 03/084764 A2 zu entnehmen. Hier ist eine Beugungsstruktur beschrieben, welche durch eine additive oder eine subtraktive Überlagerung einer makroskopischen Struktur mit einem mikroskopisch feinen Reliefprofil gebildet ist.

In vorteilhaften Ausgestaltungen ist vorgesehen, dass die Reliefstruktur mit Antireflexwirkung und/oder als Diffusor und/oder schmutzabweisend ausgebildet ist. Zur Ausbildung einer schmutzabweisenden Reliefstruktur kann weiter vorgesehen sein, dass die Strukturschicht hydrophob ausgebildet ist.

Bei einer Reliefstruktur mit Antireflexwirkung ist der Abstand zwischen zwei benachbarten Erhebungen der Reliefstruktur insbesondere kleiner als die Wellenlänge der auftreffenden Strahlung.

Bei einer als Diffusor ausgebildeten Reliefstruktur ist der Abstand zwischen zwei benachbarten Erhebungen der Reliefstruktur insbesondere kleiner als die 10-fache Wellenlänge der auftreffenden Strahlung.

Diese vorstehend genannten Eigenschaften der Reliefstruktur können dadurch ausgebildet sein, dass die Reliefstruktur ein hohes Tiefen-zu-Breiten-Verhältnis aufweist, vorzugsweise ein Tiefen-zu-Breiten-Verhältnis > 1.

Das dimensionslose Tiefen-zu-Breiten-Verhältnis ist ein kennzeichnendes Merkmal vorzugsweise periodischer Strukturen. Als Tiefe t ist hier der Abstand zwischen dem höchsten und dem tiefsten aufeinanderfolgenden Punkt einer solchen Struktur bezeichnet, d.h. es handelt sich um die Tiefe eines "Tales". Als Breite b ist der Abstand zwischen zwei benachbarten höchsten Punkten, d.h. zwischen zwei "Bergen", bezeichnet. Die Breite b wird auch als Gitterperiode bezeichnet, wenn es sich bei der Reliefstruktur um ein Beugungsgitter handelt. Je höher nun das Tiefen-zu-Breiten-Verhältnis ist, desto steiler sind die "Berg"-Flanken ausgebildet. Wenn es sich um eine rechteckförmige Reliefstruktur handelt, sind die "Berg"-Flanken mit senkrechtem Verlauf ausgebildet.

Die Reliefstruktur kann beispielsweise als Lineargitter oder als Kreuzgitter ausgebildet sein, d.h. sich in einer durch x-y-Koordinaten aufgespannten Ebene in x oder/und y-Richtung erstrecken. Bei der Reliefstruktur kann es sich auch um eine Struktur handeln, die sich in drei Richtungen erstreckt ist, beispielsweise um ein Hexagonalgitter.

Es kann vorgesehen sein, dass die Breite bzw. Gitterperiode der Reliefstruktur kleiner als die Lichtwellenlänge ist, wenn es sich um eine optisch aktive Reliefstruktur zur Entspiegelung einer Oberfläche handelt. Für den Bereich des sichtbaren Lichtes heißt das unter Berücksichtigung der maximalen spektralen Empfindlichkeit des menschlichen Auges für die Lichtwellenlänge λ = 555 nm, dass die Gitterperiode b < 550 nm sein muss. Die für eine gute Entspiegelung notwendige Mindesttiefe der Reliefstruktur muss mindestens in der Größenordnung einer halben Lichtwellenlänge liegen, d.h. t > 275 nm.

Zur Erhöhung der mechanischen Stabilität der Reliefstruktur kann auch vorgesehen sein, dass die Reliefstruktur als eine von einer Mikrostruktur überlagerte Makrostruktur ausgebildet ist. Die Makrostruktur kann mit einer Gitterperiode ausgebildet sein, die das 10fache bis 100flache der Wellenlänge der einfallenden Strahlung beträgt, d.h. für λ = 550 nm ist b = 5,5 µm bis 55 µm. Für die Dimensionierung der Mikrostruktur gelten die vorstehend genannten Regeln.

Wenn die "Berge" in der Makrostruktur regelmäßig verteilt sind, können bei der Reflexion der einfallenden Strahlung unerwünschte Richtungseffekte auftreten, die ein sog. Moiré hervorrufen. Deshalb kann vorzugsweise vorgesehen sein, dass die "Berge" in der Makrostruktur zufällig verteilt sind, so dass die an der Oberfläche der Reliefstruktur auffallende Strahlung vollständig diffus reflektiert wird.

Es kann also weiter vorgesehen sein, die Reliefstruktur als Diffusor auszubilden. Dabei kann die an ihrer Oberfläche mit einer solchen Reliefstruktur ausgebildete Strukturschicht sowohl im Auflicht als auch im Durchlicht als Diffusor ausgebildet sein. Die Strukturschicht kann so beispielsweise als Mattscheibe für eine Spiegelreflexkamera oder als Rückprojektionsfläche oder als Oberfläche eines Displays eingesetzt werden. In allen diesen Fällen bewirkt sie, dass das rückgestrahlte bzw. das hindurchgestrahlte Licht in einem großen Raumwinkel wahrnehmbar ist.

In einer weiteren vorteilhaften Ausgestaltung kann vorgesehen sein, die Reliefstruktur mit Mikrolinsen auszubilden, deren Brechungsindex variiert und so Licht diffus abzulenken. Dieser als Indexgradation oder als GRIN-Effekt bekannte optische Effekt kann beispielsweise mit Hilfe photopolymeren Materials ausgebildet werden. Dabei diffundieren Monomere in Bereiche, die durch Licht polymerisiert sind, so dass in jeder Mikrolinse ein ortsabhängiger Brechungsindex ausgebildet ist. Ein solches photopolymeres Material sind photopolymerisierbare Monomere oder Oligomere oder Mischungen aus photopolymerisierbaren Monomeren und Oligomeren. Dazu zählen Epoxydharze, Allyle, Vinylether und andere vinylhaltige organische Monomere sowie Acrylate und Methacrylate. Dem photopolymeren Material kann ein Photoinitiator beigefügt sein, der die Polymerisation bei Lichteinwirkung startet und ein Inhibitor, der die Polymerisation unterhalb eines Schwellwertes der Lichtstärke verhindert, beispielsweise Sauerstoff.

Es kann vorzugsweise vorgesehen sein, den Durchmesser der Mikrolinsen zwischen 3 µm und 80 µm auszubilden, weiter vorzugsweise zwischen 5 µm und 50 µm auszubilden.

Die Reliefstruktur kann aber auch derart ausgestaltet sein, dass sie Licht in einem vorbestimmten Winkelbereich streut. Durch Verwendung von Reliefstrukturen mit asymmetrischem Profil können dabei auch asymmetrische Lichtverteilungen erzielt werden.

Eine schmutzabweisende Reliefstruktur ist dadurch gebildet, dass sie auf hydrophobem Material ausgebildet ist und dass die Gitterperiode kleiner als die mittleren Abmessungen der Schmutzpartikel gewählt ist. Feine Schmutzpartikel, die Abmessungen in der Größenordnung von 2 bis 5 µm aufweisen, werden durch herabrollende Wassertropfen gebunden und so von der Reliefstruktur entfernt. Dabei wirken bereits die feinen Erhebungen der Reliefstruktur hydrophob, weil das Wasser wegen seiner Oberflächenspannung die Reliefstruktur nicht zu benetzen vermag. Insbesondere die Kombination der vorgenannten Effekte ermöglicht Lösungen, die beispielsweise deutlich über den bekannten Stand der Technik hinausgehen, die Oberflächen optischer Bauelemente durch Interferenzschichten zu entspiegeln.

Es kann weiter vorgesehen sein, die erfindungsgemäße Strukturschicht auch auf mit herkömmlicher Entspiegelung versehenen optischen Baugruppen nachträglich aufzubringen. Auch für Displays und photovoltaische Elemente kann der erfindungsgemäße Mehrschichtkörper vorteilhafterweise vorgesehen sein.

Es kann weiter vorgesehen sein, dass die Strukturschicht als optisches Bauelement oder als Teil eines optischen Bauelements ausgebildet ist. Es kann sich dabei beispielsweise um eine Fresnellinse handeln, die trotz ihrer flachen Ausbildung die optische Wirkung einer mit wesentlich höherer Dicke ausgebildeten Konvexlinse entfalten kann. Beispielsweise kann eine derartige Fresnellinse in ein für eine Zeitschrift bestimmtes Lesezeichen integriert sein, und so Personen mit eingeschränktem Sehvermögen das Lesen kleiner Schriften ermöglichen.

Das Aufbringen der Strukturschicht auf ein mit einer technischen Oberfläche zu versehenes Objekt ist besonders einfach und sicher möglich, weil die Strukturschicht mit einer Kleberschicht einen Mehrschichtkörper bildet, der bis zu seiner Aufbringung auf die Oberfläche des Objekts und noch während des Applizier-Prozesses durch die Trägerfolie vor Beschädigung der Oberflächenstruktur geschützt ist. Bei dem Kleber handelt es sich vorzugsweise um einen Heißkleber. Die Strukturschicht kann damit beispielsweise mittels eines Heißprägeprozesses unter Einwirkung von Druck und Hitze appliziert werden. Als weitere Kleber können Kaltkleber, druckempfindliche Kleber und UV-härtbare Kleber vorgesehen sein. In diesem Fall ist es vorteilhaft, dass die der Replizierschicht gegenüberliegende Oberfläche der Trägerfolie mit einer Ablöseschicht versehen wird, wodurch ein Aufrollen der Transferfolie ermöglicht wird, ohne dass die Gefahr besteht, dass sich beim Abrollen der Transferfolie die Strukturschicht von der Trägerfolie löst.

Der Kleber kann jedoch auch auf dem Objekt aufgebracht sein. Der Transfer kann wiederum beispielsweise unter Einwirkung von Druck und Temperatur erfolgen. Besonders vorteilhaft ist der Druck des Klebers in einem vorbestimmten Muster, insbesondere im Register zum Objekt, auf welches die Strukturschicht übertragen werden soll.

Der mit der erfindungsgemäßen Strukturschicht ausgebildete Mehrschichtkörper kann für vielfältige Aufgaben modifiziert werden, indem er neben der Kleberschicht mit weiteren Schichten versehen wird. Es kann beispielsweise vorgesehen sein, dass der Mehrschichtkörper zur Messung oder Detektion von Gasen und/oder Flüssigkeiten und/oder Feststoffen für biologische und/oder medizinische Anwendungen ausgebildet ist. Der Mehrschichtkörper kann auch als Sicherheitselement zum Schutz von Dokumenten und/oder Wertgegenständen ausgebildet sein, beispielsweise dadurch, dass in sein Oberflächenrelief eine Strukturierung in Form einer Kennzeichnung oder eines Logos eingebracht ist.

Weiterhin kann vorgesehen sein, dass der Mehrschichtkörper als applizierbare Antireflexschicht, als applizierbarer Diffusor oder als applizierbare selbstreinigende Schutzschicht ausgebildet ist. Der Mehrschichtkörper kann weiterhin als optisches Bauelement oder als Teil eines optischen Bauelements ausgebildet sein. Zudem kann der Mehrschichtkörper als applizierbare Dekorationsschicht ausgebildet sein oder als applizierbare Schicht zur Modifizierung der Oberflächenreibung ausgebildet sein.

Im folgenden wird die Erfindung anhand von mehreren Ausführungsbeispielen unter Zuhilfenahme der beiliegenden Zeichnungen beispielhaft verdeutlicht.

Es zeigen
- Fig. 1: einen auf ein Trägersubstrat aufgebrachten erfindungsgemäßen Mehrschichtkörper in schematischer Schnittdarstellung;
- Fig. 2a bis 2c: Fertigungsstufen des Mehrschichtkörpers in Fig. 1 in schematischer Schnittdarstellung;
- Fig. 2d: das Aufbringen des Mehrschichtkörpers in Fig. 2e auf das Trägersubstrat;
- Fig. 3: ein erstes Ausführungsbeispiel einer Reliefstruktur in schematischer Schnittdarstellung;
- Fig. 4: ein zweites Ausführungsbeispiel einer Reliefstruktur in schematischer Schnittdarstellung;
- Fig. 5a und 5b: eine drittes Ausführungsbeispiel einer Reliefstruktur in schematischer Schnittdarstellung;
- Fig. 6: ein erstes Applikationsbeispiel in schematischer Schnittdarstellung;
- Fig. 7: ein zweites Applikationsbeispiel in schematischer Schnittdarstellung.

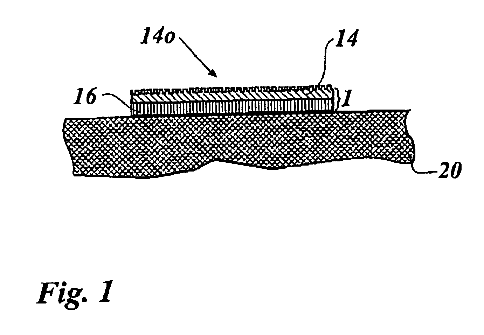

Fig. 1 zeigt einen Mehrschichtkörper 1, der aus einer transparenten Strukturschicht 14 und einer Kleberschicht 16 gebildet ist, auf einem Trägerkörper 20. Bei dem Trägerkörper 20 kann es sich beispielsweise um die Frontscheibe eines Displays handeln.

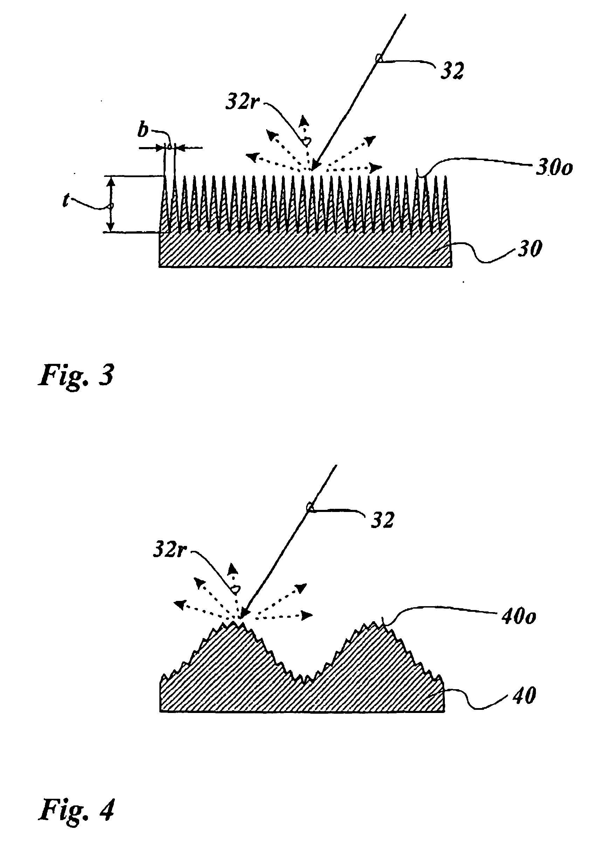

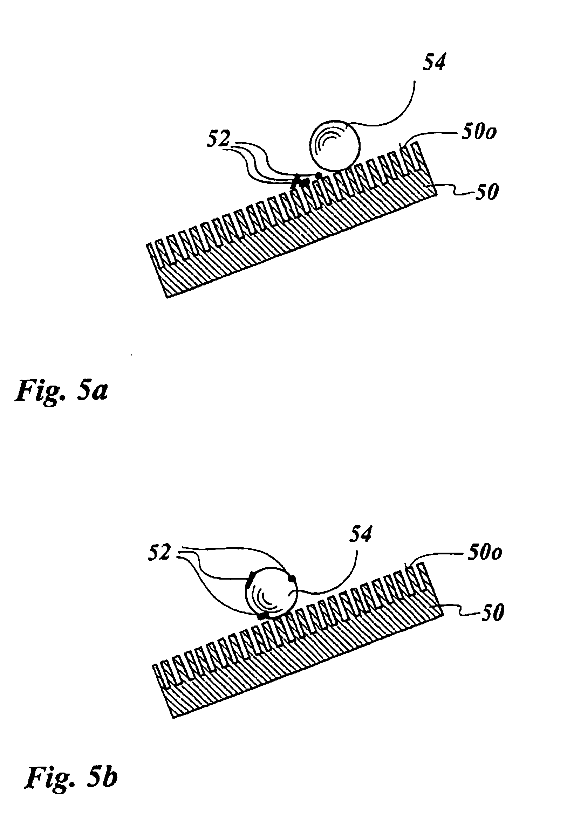

Die transparente Strukturschicht 14 weist auf ihrer oberen, der Kleberschicht 16 abgewandten Seite eine Reliefstruktur 14o auf. Bei der Reliefstruktur 14o kann es sich beispielsweise um eine reflexmindernde Reliefstruktur handeln, wie weiter unten in Fig. 3 und 4 beschrieben. Es kann sich bei der Reliefstruktur 14o auch um eine schmutzabweisende Reliefstruktur handeln, die weiter unten in Fig. 5a und 5b beschrieben ist.

Weiter kann vorgesehen sein, die Reliefstruktur 14o als Retroreflektor auszubilden. Dabei kann es sich beispielsweise um einen Teilbereich handeln, der die Form eines Logos aufweist.

Die Reliefstruktur 14o kann auch für eine Reliefdarstellung mittels Strukturen bestimmt sein, deren Profiltiefe auf einen vorbestimmten Wert beschränkt ist, analog zu einer Fresnellinse. Eine derartige Reliefstruktur stört aufgrund der geringen Reflexion an der Oberfläche die Betrachtung beispielsweise eines darunter liegenden Dokuments nur wenig, ist jedoch unter geeigneten Betrachtungsbedingungen dennoch einfach überprüfbar.

Weiter kann vorgesehen sein, dass die Oberfläche der Strukturschicht 14 eine partielle Metallisierung oder dielektrische Schicht aufweist.

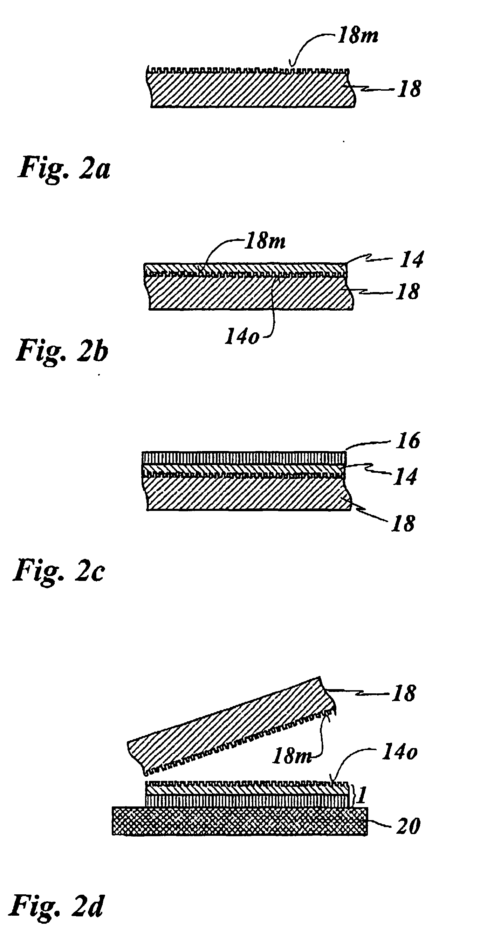

Die Fig. 2a bis 2c zeigen nun Fertigungsstufen des in Fig. 1 dargestellten Mehrschichtkörpers 1.

Fig. 2a zeigt eine Trägerfolie 18, in die eine Master-Reliefstruktur 18m abgeformt ist. Bei der Trägerfolie 18 kann es sich um eine Polyesterfolie oder eine Polypropylenfolie oder Folie aus BOP mit einer Dicke von 6 bis 150 µm, vorzugsweise mit einer Dicke von 12 µm bis 70 µm, handeln. Die Master-Reliefstruktur 18m kann beispielsweise durch Heißprägen direkt in der Trägerfolie erzeugt sein. Dazu kann eine erhitzte Prägewalze in Kontakt mit der Trägerfolie gebracht sein.

Die Master-Reliefstruktur 18m kann in einem Zwischenschritt partiell mit einer metallischen oder dielektrischen Schicht versehen werden, indem sie beispielsweise bedampft wird, um wie oben beschrieben, die Strukturschicht 14 mit partiellen Überzügen auszubilden.

In einer weiteren nicht erfindungsgemäßen Ausbildung kann vorgesehen sein, dass die Trägerfolie 18 mit einer Lackschicht versehen wird, in welche die Master-Reliefstruktur 18m abgeformt wird. Insbesondere zur Ausbildung besonders feiner oder tiefer Master-Reliefstrukturen 18m, wie sie für entspiegelte Oberflächen benötigt werden, kann vorgesehen sein, dass es sich um einen UV-härtbaren Lack handelt, in den die Master-Reliefstruktur 18m durch UV-Replikation eingebracht wird. Der UV-härtbare Lack kann besonders fließfähig eingestellt werden, so dass er auch engste Kavitäten der Druckwalze vollständig auszufüllen vermag. Der UV-härtbare Lack kann unmittelbar durch UV-Licht, das durch die Trägerfolie geleitet wird, ausgehärtet werden. Es kann sich bei der Druckwalze aber auch um eine optische Druckwalze handeln, bei der die Master-Reliefstruktur 18m durch optische Abbildung übertragen wird, der UV-Lack partiell ausgehärtet wird und in einer nachgeordneten Waschstation unausgehärteter UV-Lack ausgewaschen wird.

Bei dem UV-härtbaren Lack kann es sich beispielsweise um einen der folgenden Lacke handeln:

Monomere oder oligomere Polyesteracrylate, Polyetheracrylate, Urethanacrylate oder Epoxyacrylate sowie aminmodifizierte Polyesteracrylate, aminmodifizierte Polyetheracrylate oder aminmodifizierte Urethanacrylate.

Es kann aber auch vorgesehen sein, dass es sich um einen thermoplastischen Lack handelt, der mittels Heißprägen unter Druck und Temperatur repliziert wird. Es kann sich dabei beispielsweise um einen Lack folgender Zusammensetzung handeln:

| **Bestandteil** | **Gewichts-Teile** |
|---|---|
| Methylethylketon | 400 |
| Ethylacetat | 260 |
| Butylacetat | 160 |
| Polymethylmethacrylat | 150 |
| (Erweichungspunkt ca. 170 °C) | |
| Styrolcopolymerisat | 30 |
| (Erweichungspunkt ca. 100 °C) | |

Wie die vorstehend beschriebenen Beispiele verdeutlichen, können bei dem erfindungsgemäßen Verfahren die Eigenschaften der Master-Reliefstruktur in weiten Grenzen beeinflusst werden, wobei für die Massenproduktion geeignete Prozessschritte anwendbar sind.

Fig. 2b zeigt nun die replizierte Trägerfolie 18, auf der die transparente Strukturschicht 14 vollflächig aufgebracht ist. Die Strukturschicht 14 besteht aus einem Lack, insbesondere aus einem thermoplastischen Lack oder aus einem UV-härtbaren Lack in einer Schichtdicke im Bereich von 0,5 µm bis < 20 µm, der vorzugsweise mittels einer Druckwalze aufgetragen und nach dem Auftrag ausgehärtet wird. Es ist auch möglich, den Lack durch Aufsprühen, Aufrakeln oder Spin-Coating auf die replizierte Trägerfolie aufzubringen.

Die Strukturschicht 14 kann für dickere Strukturschichten > 10 µm auch aus einem dünnen PET-Träger bestehen, welcher mit einem UV-härtbaren Lack versehen ist und auf die Trägerfolie 18 blasenfrei laminiert wird. Der Lack haftet vornehmlich auf dem dünnen PET und übernimmt die Relief-Masterstruktur 18m von der Trägerfolie 18. Anschließend kann vollflächig der Kleber 16 aufgetragen werden. Die dünne PET-Folie, die nun Teil der Strukturschicht 14 ist, bricht nun beim Heißprägen nicht mehr in der bekannten Art auf. Es kann deshalb vorgesehen sein, die Strukturschicht 14 in der gewünschten Form anzustanzen und die nicht zu übertragenden Bereiche der Strukturschicht 14 mit dem Stanzgitter abzuziehen. Die Form der Übertragung wird somit durch Stanzung festgelegt und nicht durch den Transferstempel.

Es ist weiterhin möglich, die Strukturschicht 14 an der Oberfläche lokal aus unterschiedlichen Materialien aufzubauen, indem verschiedene Teilbereiche gedruckt werden. Besonders vorteilhaft ist das Aufbringen von verschiedenen Materialien im Register zu unterschiedlichen Reliefstrukturen 14o. Dadurch können lokal die optimalen Kombinationen von Material und Oberflächenrelief in einer Strukturschicht 14 realisiert werden.

Die replizierte Trägerfolie wirkt dabei als Form für die Abformung der Reliefstruktur. Dabei kann die Abformungsqualität durch Druck und/oder Temperatur beim Aufbringen der Strukturschicht verbessert werden. Es kann aber auch ein sehr dünnflüssiger Lack vorgesehen sein, der besonders gut auch feinste Kavitäten der Master-Reliefstruktur auszufüllen vermag. Im allgemeinen kann vorgesehen sein, den aufgebrachten Lack durch Trocknen auszuhärten, beispielsweise durch thermische Strahlung oder durch Kontakt mit einem beheizten Körper, beispielsweise einer rotierenden Walze. Eine Trockenwalze kann vorgesehen sein, um die Strukturschicht mit einer besonders glatten Rückseite auszubilden. Bei Verwendung von UV-härtbarem Lack kann die Härtung der Strukturschicht besonders einfach mit einer transparenten Walze oder von der Vorderseite der Trägerfolie her durchgeführt werden.

Es kann auch vorgesehen sein, durch UV-Härten die Strukturschicht mit ortsabhängigem Brechungsindex auszubilden. Die dazu notwendige musterförmige Bestrahlung kann beispielsweise durch zwischen der Strahlungsquelle und der Strukturschicht angeordnete Masken oder durch die Master-Reliefstruktur erzeugt sein.

Weiter kann die Strukturschicht mit einem vorbestimmten Brechungsindex ausgebildet werden, beispielsweise um Brechung zwischen der Strukturschicht und darunter angeordneten Schichten zu vermeiden. Vorteilhafterweise ist ein Brechungsindex zwischen 1,4 und 1,7 vorgesehen, wenn die Strukturschicht auf Polymer-Substrate oder auf optisches Glas aufgebracht wird.

Weil die Reliefstruktur der Strukturschicht der Umwelt ausgesetzt ist, kann auch vorgesehen sein, die Strukturschicht besonders widerstandsfähig gegen mechanische und/oder chemische Beanspruchungen und/oder hydrophob auszubilden.

Ein besonders mechanisch widerstandsfähiger UV-härtender Lack kann folgende Zusammensetzung aufweisen:

| **Bestandteil** | **Gewichts-Teile** |
|---|---|
| Methylethylketon | 30 |
| Ethylacetat | 20 |
| Cyclohexanon | 5 |
| Polymethylmethacrylat | 18 |
| (MG 60000 g/mol) | |
| Dipentaerithritolpentaacrylat | 25 |
| Photoinitiator (z.B. Irgacure | 2 |
| 1000 der Firma Ciba Geigy) | |

Mit folgender Zusammensetzung wird ein UV-härtender hydrophober Lack erhalten:

| **Bestandteil** | **Gewichts-Teile** |
|---|---|
| Methylethylketon | 28 |
| Ethylacetat | 20 |
| Cyclohexanon | 5 |
| Polymethylmethacrylat | 18 |
| (MG 60000 g/mol) | |
| Dipentaerithritolpentaacrylat | 25 |
| Photoinitiator (z.B. Irgacure | 2 |
| 1000 der Firma Ciba Geigy) | |
| Polysiloxanharz | 2 |

Die Fig. 2c zeigt die dritte und zugleich letzte Fertigungsstufe des auf der Trägerfolie 18 aufgebrachten Mehrschichtkörpers 1 aus Fig. 1, bei der auf die Strukturschicht 14 eine Kleberschicht 16 aufgebracht ist. Bei der Kleberschicht 16 kann es sich vorzugsweise um einen Schmelzkleber handeln.

Es kann beispielsweise ein Kleber folgender Zusammensetzung vorgesehen sein:

| **Bestandteil** | **Gewichtsteile** |
|---|---|
| Methylethylketon | 550 |
| Ethylacetat | 175 |
| Cyclohexanon | 50 |
| Polyurethanharz (Fp ≥ 200 °C) | 100 |
| Polyvinylchlorid Terpolymer | 120 |
| (Tg = 90 °C) | |
| Siliciumdioxid | 5 |

Fig. 2d zeigt nun den auf dem Trägerkörper 20 aufgebrachten Mehrschichtkörper 1, von dem die Trägerfolie 18 nach dem Aufbringen des Mehrschichtkörpers 1 abgezogen ist. Der Mehrschichtkörper 1 und die Trägerfolie 18 sind gegenüber der in den Fig. 2a bis 2c dargestellten Lage um 180° gedreht, so dass die Reliefstruktur 14o nun die von dem Trägerkörper 18 abgewandte Oberseite des Mehrschichtkörpers 1 bildet.

Die Ablösbarkeit der Trägerfolie 18 von dem Mehrschichtkörper 1 kann durch die Materialpaarung der Trägerfolie 18 und der Strukturschicht 14 bewirkt sein. Es kann aber auch vorgesehen sein, zwischen der Trägerfolie 18 und der Strukturschicht 14 eine Ablöseschicht anzuordnen, die beispielsweise aus einer Wachsschicht gebildet sein kann. Allerdings ist die Dicke der Ablöseschicht bei der Ausbildung der Master-Reliefstruktur 18m der Trägerfolie 18 zu berücksichtigen. Die Strukturschicht 14 kann bevorzugt als Schutzschicht ausgebildet sein.

Das vorstehend beschriebene Verfahren ist besonders gut für einen kontinuierlichen Rolle-zu-Rolle-Prozess geeignet, bei dem der Mehrschichtkörper 1 schichtweise auf die Trägerfolie 18 aufgetragen und strukturiert wird.

Fig. 3 zeigt nun ein erstes Ausführungsbeispiel einer Strukturschicht 30 mit einer Reliefstruktur 30o in schematischer Schnittdarstellung. Es handelt sich hierbei um ein lineares Beugungsgitter, das als Subwellenlängengitter ausgebildet ist. Die Gitterperiode eines Subwellenlängengitters, d.h. der Abstand zwischen zwei "Bergen" ist kleiner als die Lichtwellenlänge. Die Reliefstruktur 30o weist ein hohes Tiefen-zu-Breiten-Verhältnis auf.

Das dimensionslose Tiefen-zu-Breiten-Verhältnis ist ein kennzeichnendes Merkmal vorzugsweise periodischer Strukturen. Als Tiefe t ist hier der Abstand zwischen dem höchsten und dem tiefsten aufeinanderfolgenden Punkt einer solchen Struktur bezeichnet, d.h. es handelt sich um die Tiefe eines "Tales". Als Breite b ist der Abstand zwischen zwei benachbarten höchsten Punkten, d.h. zwischen zwei "Bergen", bezeichnet. Die Breite b wird auch als Gitterperiode bezeichnet. Je höher nun das Tiefen-zu-Breiten-Verhältnis ist, desto steiler sind die "Berg"-Flanken ausgebildet. Wenn es sich um eine rechteckförmige Reliefstruktur handelt, wie in Fig. 1 dargestellt, sind die "Berg"-Flanken mit senkrechtem Verlauf ausgebildet.

Trifft nun ein Lichtstrahl 32 auf die Reliefstruktur 30o, wird er in zahlreiche reflektierte Lichtstrahlen 32r aufgespalten, die jeder für sich eine geringere Intensität als der Lichtstrahl 32 aufweisen. Auf diese Weise werden störende Lichtreflexe unterbunden. Periodische Mikrostrukturen mit antireflektierender Wirkung werden auch als Mottenaugenstrukturen bezeichnet. Neben linearen Gittern sind insbesondere Kreuzgitter und Hexagonalgitter für Mottenaugenstrukturen geeignet.

Unter der Berücksichtigung, dass die maximale spektrale Empfindlichkeit des menschlichen Auges für die Lichtwellenlänge λ = 555 nm gegeben ist, muss die Gitterperiode b einer im sichtbaren Bereich reflexmindernden Reliefstruktur b < 550 nm sein. Die für eine gute Entspiegelung notwendige Mindesttiefe der Reliefstruktur muss mindestens in der Größenordnung einer halben Lichtwellenlänge liegen, d.h. in diesem Ausführungsbeispiel bei etwa 350 nm.

Die Reliefstruktur 30o kann wegen der durch das hohe Tiefen-zu-Breiten-Verhältnisses sehr schlank ausgebildeten Strukturelemente leicht beschädigt werden. In Fig. 4 ist eine Strukturschicht 40 mit einer Reliefstruktur 40o gezeigt, die diese Nachteile vermeidet. Wie zu erkennen ist, handelt es sich bei der Reliefstruktur 40o um eine Reliefstruktur, die durch Überlagerung einer periodischen Makrostruktur mit einer Mikrostruktur mit hohem Tiefen-zu-Breiten-Verhältnis gekennzeichnet ist. Die Reliefstruktur 40o wirkt wie die Reliefstruktur 30o in Fig. 3 reflexmindernd, indem sie den auffallenden Lichtstrahl 32 in eine Vielzahl diffus reflektierter Lichtstrahlen 32r aufspaltet.

Die Fig. 5a und 5b zeigen nun eine Strukturschicht 50 mit einer Reliefstruktur 50o, die als Lineargitter mit hohem Tiefen-zu-Breiten-Verhältnis und mit senkrechten Flanken ausgebildet ist. Die Reliefstruktur 50o ist weiter hydrophob ausgebildet.

Fig. 5a zeigt Schmutzpartikel 52, die auf der Oberfläche der Reliefstruktur 50o abgelagert sind. Ein Wassertropfen 54 vermag nun auf der gegen die Waagerechte geneigten Oberfläche der Reliefstruktur 50o abzurollen und kommt dabei mit den Schmutzpartikeln 52 in Kontakt.

Wie in Fig. 5b dargestellt, übt der Wassertropfen 54 höhere Bindungskräfte auf die Schmutzpartikel 52 aus als die Oberfläche der Reliefstruktur 50o. Auf diese Weise werden die Schmutzpartikel 52 am herabrollenden Wassertropfen 54 gebunden und von der Oberfläche der Reliefstruktur 50o entfernt.

Weil Reliefstrukturen mit hohem Tiefen-zu-Breiten-Verhältnis sowohl reflexmindernd als auch schmutzabweisend ausgebildet sein können, ist auf diese Weise ein besonders effektiver Schutz optischer Flächen ausbildbar. Unter optischen Flächen sind hierbei transparente Flächen verstanden, die innerhalb eines optischen Strahlengangs angeordnet sind. Es kann sich also beispielsweise um die Oberflächen eines Displays oder eines optischen Abbildungssystems handeln, aber auch um die Oberflächen von Sicherheitsmerkmalen, die z.B. auf Dokumenten, Ausweiskarten und Waren angebracht sind. Beispielsweise können Ausweiskarten beim täglichen Gebrauch leicht verschmutzen, so dass zumindest das äußere optische Erscheinungsbild der Ausweiskarte leidet. Es kann aber auch sein, dass ein unter der Oberfläche der Ausweiskarte angebrachtes optisches Sicherheitsmerkmal nicht mehr fehlerfrei auslesbar ist, wenn die Oberfläche verschmutzt ist.

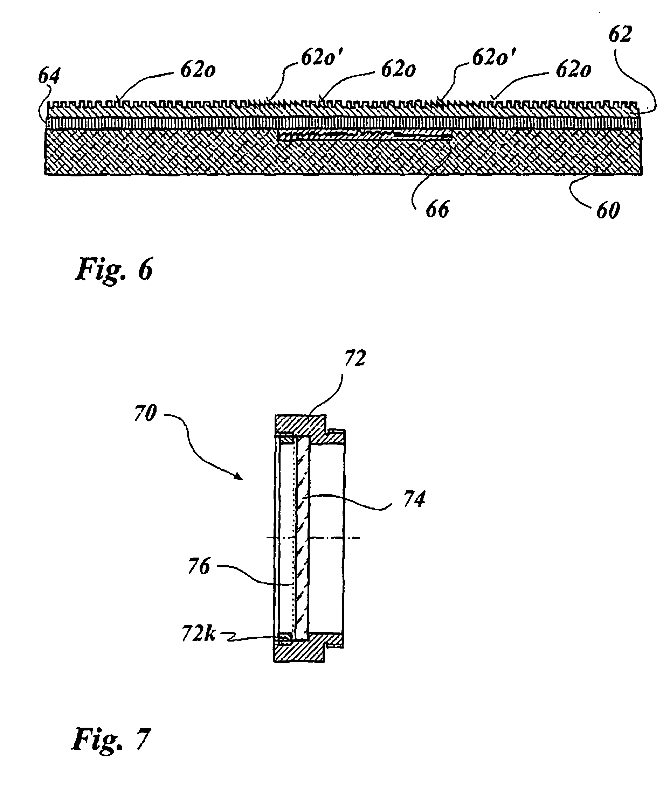

Fig. 6 zeigt eine Ausweiskarte 60 in einer schematischen Schnittdarstellung, deren Oberfläche mit einer vorstehend beschriebenen Strukturschicht 62 mit einer reflexmindernden und schmutzabweisenden Reliefstruktur 62o beschichtet ist. Die Strukturschicht 62 ist durch eine Kleberschicht 64 unlösbar mit der Ausweiskarte 60 verbunden und überdeckt u.a. ein optisches Sicherheitselement 66, das beispielsweise diffraktive Strukturen aufweisen kann. Die Kleberschicht 64 kann vorteilhafterweise annähernd den gleichen Brechungsindex wie die Strukturschicht 62 aufweisen.

Die Strukturschicht 62 stellt nun neben ihrer Schutzfunktion auch ein fälschungssicheres Merkmal bereit. Die Strukturschicht 62 ist optisch nicht kopierbar und wegen ihrer geringen Dicke ohne Zerstörung von der Ausweiskarte 60 nicht ablösbar und deshalb nicht übertragbar. Die Strukturschicht 62 weist vorteilhafterweise verschiedene Bereiche mit unterschiedlicher Strukturierung auf. In dem in Fig. 6 dargestellten Ausführungsbeispiel handelt es sich um Bereiche mit einer Reliefstruktur 62o', die sich von der Reliefstruktur 62o durch ihre optische Wirkung unterscheidet. Die Reliefstruktur 62o' ist in ihrem makroskopischen Verlauf ringförmig ausgebildet und rahmt das Sicherheitselement 66 optisch ein.

Die Ausbildung der Strukturschicht 62 mit unterschiedlichen Reliefstrukturen 62o, 62o' kann der Ausbildung eines Sicherheitsmerkmals dienen, beispielsweise aufgrund der Unterschiede des Reflexionsvermögens, der Griffigkeit oder des Benetzungsverhaltens der Reliefstrukturen 62o' und 62o. Die zusätzliche Reliefstruktur 62o' wird vorteilhafterweise in Form einer Kennzeichnung, wie beispielsweise eines Logos, eingebracht.

Weiter kann vorgesehen sein, dass sich Bereiche der Strukturschicht 62 taktil von ihrer Umgebung abheben oder ein taktil feststellbares Muster aufweisen. Die Bereiche können sich durch Eigenschaften, wie Härte, Elastizität, Schlupfverhalten, Wärmeleitfähigkeit oder Klebrigkeit erfühlen lassen oder taktil feststellbare Erhebungen bzw. Vertiefungen aufweisen, die ein Muster bilden können, wie beispielsweise Zeichen der Blindenschrift oder einfache bildliche Logos, wie beispielsweise Quadrate, Rauten, Kreise oder Sterne. Die Bereiche können auch dadurch taktil feststellbar sein, indem sie in Bezug auf ihre Umgebung vertieft oder erhaben ausgebildet sind.

Es kann auch vorgesehen sein, den taktilen Eindruck mit einem optischen Eindruck zu kombinieren, beispielsweise aufgrund einer Vorzugsorientierung der Reliefstruktur.

Weiter kann vorgesehen sein, die Strukturschicht 62 nach der Applikation mit einem nachträglichen Überdruck zu kombinieren, beispielsweise mittels Intaglio oder auch als Blindprägung. Dadurch kann lokal ein zusätzliches taktil wahrnehmbares Merkmal ausgebildet werden, das beispielsweise auch für eine Personalisierung vorgesehen sein kann.

Fig. 7 zeigt nun in einer Schnittdarstellung ein optisches Einschraubfilter 70, wie es beispielsweise als UV-Sperrfilter für Video-Kameras verwendbar ist. Das Einschraubfilter ist im wesentlichen von einem ringförmigen Filterkörper 72 und einer Filterscheibe 74 gebildet, die in dem Filterkörper 72 durch einen Klemmring 72k befestigt ist. Die Filterscheibe 74 ist an ihrer vorderen, vom in Fig. 7 nicht dargestellten Kameraobjektiv abgewandten Seite mit einer reflexmindernden und schmutzabweisenden Strukturschicht 76 versehen. Die Strukturschicht 76 ist auf der planen Oberfläche der Filterscheibe 74 besonders gut aufbringbar.

## Patentansprüche

1. Transferfolie, insbesondere Heißprägefolie, die eine Trägerfolie (18) und eine auf der Trägerfolie (18) angeordnete und von der Trägerfolie (18) ablösbare Übertragungslage mit einer Strukturschicht (14) umfasst,
**dadurch gekennzeichnet,**
**dass** auf der Trägerfolie (18) auf ihrer der Strukturschicht (14) zugewandten Seite eine Master-Reliefstruktur (18m) abgeformt ist und dass die Strukturschicht (14) auf ihrer der Trägerfolie (18) zugewandten Seite eine zur Master-Reliefstruktur der Trägerfolie (18) komplementäre Reliefstruktur (14o) aufweist, wobei die komplementäre Reliefstruktur (14o) eine Mikrostruktur umfasst und wobei die Strukturschicht eine Dicke < 20 µm aufweist.

2. Transferfolie nach Anspruch 1,
**dadurch gekennzeichnet,**
**dass** die Trägerfolie (18) eine Replizierlack-Schicht aufweist, in die die Master-Reliefstruktur (18m) abgeformt ist.

3. Transferfolie nach einem der vorhergehenden Ansprüche,
**dadurch gekennzeichnet,**
**dass** die Strukturschicht (14) transparent ausgebildet ist.

4. Transferfolie nach einem der vorhergehenden Ansprüche,
**dadurch gekennzeichnet,**
**dass** zwischen der Trägerfolie (18) und der Übertragungslage eine Ablöseschicht angeordnet ist.

5. Transferfolie nach einem der vorhergehenden Ansprüche,
**dadurch gekennzeichnet,**
**dass** auf der Reliefstruktur (14o) eine Schutzschicht ausgebildet ist.

6. Transferfolie nach einem der vorhergehenden Ansprüche,
**dadurch gekennzeichnet,**
**dass** die Reliefstruktur zusätzlich zu der Mikrostruktur weiterhin eine Makrostruktur umfasst.

7. Transferfolie nach einem der vorhergehenden Ansprüche,
**dadurch gekennzeichnet,**
**dass** die Tiefe der Reliefstruktur (14o) als eine Funktion der Koordinaten x und/oder y ausgebildet ist, die in x-Richtung und/oder in y-Richtung periodisch variiert.

8. Transferfolie nach einem der vorhergehenden Ansprüche,
**dadurch gekennzeichnet,**
**dass** die Tiefe der Reliefstruktur (14o) im wesentlichen als eine Rechteckfunktion der Koordinaten x oder y ausgebildet ist, die in x-Richtung oder in y-Richtung periodisch variiert.

9. Transferfolie nach einem der vorhergehenden Ansprüche,
**dadurch gekennzeichnet,**
**dass** die Tiefe der Reliefstruktur (14o) als eine Sägezahnfunktion der Koordinaten x oder y ausgebildet ist, die in x-Richtung oder in y-Richtung periodisch variiert.

10. Transferfolie nach einem der vorhergehenden Ansprüche,
**dadurch gekennzeichnet,**
**dass** die Reliefstruktur (14o) mit einem Tiefen-zu-Breiten-Verhältnis > 2 ausgebildet ist.

11. Transferfolie nach einem der vorhergehenden Ansprüche,
**dadurch gekennzeichnet,**
**dass** die Reliefstruktur (14o) durch Überlagerung einer Makrostruktur mit einer Mikrostruktur gebildet ist.

12. Transferfolie nach Anspruch 11,
**dadurch gekennzeichnet,**
**dass** die Makrostruktur als eine Funktion der Koordinaten x und/oder y
ausgebildet ist, die die Tiefe der Makrostruktur (140) in x-Richtung und/oder in y-Richtung periodisch variiert.

13. Transferfolie nach Anspruch 12,
**dadurch gekennzeichnet,**
**dass** die Makrostruktur Erhebungen aufweist, die zufällig verteilt sind.

14. Transferfolie nach einem der Ansprüche 11 bis 12,
**dadurch gekennzeichnet,**
**dass** der Abstand zwischen zwei benachbarten Erhebungen der Makrostruktur 5 µm bis 55 µm beträgt.

15. Transferfolie nach einem der Ansprüche 11 bis 14,
**dadurch gekennzeichnet,**
**dass** das Tiefen-zu-Breiten-Verhältnis der Mikrostruktur > 1 ist.

16. Transferfolie nach einem der vorhergehenden Ansprüche,
**dadurch gekennzeichnet,**
**dass** Erhebungen der Reliefstruktur (14o) als Mikrolinse mit einem Durchmesser von 3 µm bis 80 µm ausgebildet sind, insbesondere mit einem Durchmesser von 5 µm bis 50 µm ausgebildet sind.

17. Transferfolie nach Anspruch 16,
**dadurch gekennzeichnet,**
**dass** die Mikrolinsen mit einem vom Rand der Mikrolinse zum Mittelpunkt der Mikrolinse zunehmenden oder abnehmenden Brechungsindex ausgebildet sind.

18. Transferfolie nach Anspruch 16,
**dadurch gekennzeichnet,**
**dass** die Mikrolinsen als Fresnellinsen ausgebildet sind.

19. Transferfolie nach einem der vorhergehenden Ansprüche,
**dadurch gekennzeichnet,**
**dass** die Reliefstruktur (14o) schmutzabweisend ausgebildet ist, wobei der Abstand zwischen zwei Erhebungen der Reliefstruktur < 5 µm ist, das Tiefen-zu-Breiten-Verhältnis > 2 ist und die Strukturschicht hydrophob und/oder oleophob ausgebildet ist.

20. Transferfolie nach einem der vorhergehenden Ansprüche,
**dadurch gekennzeichnet,**
**dass** die Strukturschicht (14) als optisches Bauelement oder als Teil eines optischen Bauelements ausgebildet ist.

21. Transferfolie nach einem der vorhergehenden Ansprüche,
**dadurch gekennzeichnet,**
**dass** die Strukturschicht (14) aus unterschiedlichen Lacken der Gruppe umfassend thermoplastischen Lack, thermisch gehärteten Lack und mittels UV-Strahlung gehärteten Lack gebildet ist.

22. Transferfolie nach einem der vorhergehenden Ansprüche,
**dadurch gekennzeichnet,**
**dass** die Strukturschicht auf ihrer der Trägerfolie zugewandten Seite lokal, insbesondere im Register zu unterschiedlichen Reliefstrukturen, aus unterschiedlichen Lacken gebildet ist.

23. Verfahren zur Herstellung einer Transferfolie, die eine Trägerfolie (18) und eine auf der Trägerfolie (18) angeordnete und von der Trägerfolie (18) ablösbare Übertragungslage mit einer Strukturschicht (14) umfasst,
**dadurch gekennzeichnet,**
**dass** in die Trägerfolie (18) eine Master-Reliefstruktur (18m) abgeformt wird, dass auf die Trägerfolie (18) die Strukturschicht (14) aufgebracht wird, wobei in die Strukturschicht (14) eine zur Master-Reliefstruktur (18m) der Trägerfolie (18) komplementäre Reliefstruktur (14o) abgeformt wird, wobei die komplementäre
Reliefstruktur (14o) eine Mikrostruktur umfasst, und dass die komplementäre Reliefstruktur (14o) durch Verfestigung oder Aushärten der Strukturschicht (14) fixiert wird, wobei die Strukturschicht (14) in einer Dicke von < 20 µm ausgebildet wird.

24. Verfahren nach Anspruch 23,
**dadurch gekennzeichnet,**
**dass** die Master-Reliefstruktur (18m) durch Prägen in die Trägerfolie (18) eingebracht wird.

25. Verfahren nach Anspruch 23 oder 24,
**dadurch gekennzeichnet,**
**dass** auf die Trägerfolie (18) eine Replizierschicht aufgebracht wird und in die Replizierschicht die Master-Reliefstruktur (18m) abgeformt wird.

26. Verfahren nach einem der Ansprüche 23 bis 25,
**dadurch gekennzeichnet,**
**dass** auf die Trägerfolie (18) eine Ablöseschicht und/oder eine Schutzschicht vor dem Aufbringen der Strukturschicht (14) aufgebracht werden bzw. wird.

27. Verfahren nach einem der Ansprüche 23 bis 26,
**dadurch gekennzeichnet,**
**dass** auf die Strukturschicht (14) eine Kleberschicht (16) aufgetragen wird.

28. Verfahren nach einem der Ansprüche 23 bis 27,
**dadurch gekennzeichnet,**
**dass** die Strukturschicht (14) aus unterschiedlichen Lacken der Gruppe umfassend thermoplastischen Lack, thermisch gehärteten Lack und mittels UV-Strahlung gehärteten Lack gebildet wird.

29. Verfahren nach einem der Ansprüche 23 bis 28,
**dadurch gekennzeichnet,**
**dass** die Strukturschicht (14) auf ihrer der Trägerfolie zugewandten Seite lokal, insbesondere im Register zu unterschiedlichen komplementären Reliefstrukturen (14o), aus unterschiedlichen Lacken gebildet wird.

30. Mehrschichtkörper mit einer Strukturschicht (14), wobei die Strukturschicht (14) eine Vorderseite des Mehrschichtkörpers bildet und mittels einer Transferfolie nach einem der Ansprüche 1 bis 22 gebildet ist, wobei in eine die Vorderseite des Mehrschichtkörpers bildende erste Oberfläche der Strukturschicht (14) die komplementäre Reliefstruktur (14o) abgeformt ist und wobei die Strukturschicht (14) transparent ist und eine Dicke < 20 µm aufweist.

31. Mehrschichtkörper nach anspruch 30,
**dadurch gekennzeichnet,**
**dass** die Strukturschicht (14) aus unterschiedlichen Lacken der Gruppe umfassend thermoplastischen Lack, thermisch gehärteten Lack und mittels UV-Strahlung gehärteten Lack gebildet ist.

32. Mehrschichtkörper nach einem der Ansprüche 30 oder 31,
**dadurch gekennzeichnet,**
**dass** die erste Oberfläche lokal aus unterschiedlichen Lacken, insbesondere im Register zu unterschiedlichen komplementären Reliefstrukturen (14o), gebildet ist.

## Claims

1. Transfer film, more particularly hot embossing film, comprising a carrier film (18) and a transfer layer with a structure layer (14), said transfer layer being arranged on the carrier film (18) and being releasable from the carrier film (18),
**characterized**
**in that** a master relief structure (18m) is impressed on the carrier film (18) on that side thereof which faces the structure layer (14), and in that the structure layer (14) has, on its side facing the carrier film (18), a relief structure (14o) complementary to the master relief structure of the carrier film (18), the complementary relief structure (14o) comprising a microstructure, and the structure layer having a thickness of < 20 µm.

2. Transfer film according to Claim 1,
**characterized**
**in that** the carrier film (18) has a replication lacquer layer, into which the master relief structure (18m) is impressed.

3. Transfer film according to either of the preceding claims,
**characterized**
**in that** the structure layer (14) is embodied in transparent fashion.

4. Transfer film according to any of the preceding claims,
**characterized**
**in that** a release layer is arranged between the carrier film (18) and the transfer layer.

5. Transfer film according to any of the preceding claims,
**characterized**
**in that** a protective layer is formed on the relief structure (14o).

6. Transfer film according to any of the preceding claims,
**characterized**
**in that** the relief structure furthermore comprises a macrostructure in addition to the microstructure.

7. Transfer film according to any of the preceding claims,
**characterized**
**in that** the depth of the relief structure (14o) is formed as a function of the coordinates x and/or y, which varies periodically in the x-direction and/or in the y-direction.

8. Transfer film according to any of the preceding claims,
**characterized**
**in that** the depth of the relief structure (14o) is formed substantially as a rectangular function of the coordinates x or y, which varies periodically in the x-direction or in the y-direction.

9. Transfer film according to any of the preceding claims,
**characterized**
**in that** the depth of the relief structure (14o) is formed as a sawtooth function of the coordinates x or y, which varies periodically in the x-direction or in the y-direction.

10. Transfer film according to any of the preceding claims,
**characterized**
**in that** the relief structure (14o) is formed with a depth-to-width ratio of > 2.

11. Transfer film according to any of the preceding claims,
**characterized**
**in that** the relief structure (14o) is formed by superimposition of a macrostructure with a microstructure.

12. Transfer film according to Claim 11,
**characterized**
**in that** the macrostructure is formed as a function of the coordinates x and/or y, which periodically varies the depth of the macrostructure (14o) in the x-direction and/or in the y-direction.

13. Transfer film according to Claim 12,
**characterized**
**in that** the macrostructure has elevations that are randomly distributed.

14. Transfer film according to either of Claims 11 and 12,
**characterized**
**in that** the distance between two adjacent elevations of the macrostructure is 5 µm to 55 µm.

15. Transfer film according to any of Claims 11 to 14,
**characterized**
**in that** the depth-to-width ratio of the microstructure is > 1.

16. Transfer film according to any of the preceding claims,
**characterized**
**in that** elevations of the relief structure (14o) are formed as microlenses with a diameter of 3 µm to 80 µm, more particularly are formed with a diameter of 5 µm to 50 µm.

17. Transfer film according to Claim 16,
**characterized**
**in that** the microlenses are formed with a refractive index that increases or decreases from the edge of the microlens to the midpoint of the microlens.

18. Transfer film according to Claim 16,
**characterized**
**in that** the microlenses are formed as Fresnel lenses.

19. Transfer film according to any of the preceding claims,
**characterized**
**in that** the relief structure (14o) is formed in a dirt-repelling fashion, wherein the distance between two elevations of the relief structure is < 5 µm, the depth-to-width ratio is > 2 and the structure layer is formed in hydrophobic and/or oleophobic fashion.

20. Transfer film according to any of the preceding claims,
**characterized**
**in that** the structure layer (14) is formed as an optical component or as part of an optical component.

21. Transfer film according to any of the preceding claims,
**characterized**
**in that** the structure layer (14) is formed from different lacquers of the group comprising thermoplastic lacquer, thermally cured lacquer and lacquer cured by means of UV radiation.

22. Transfer film according to any of the preceding claims,
**characterized**
**in that** the structure layer, on its side facing the carrier film, is formed locally, more particularly in register with different relief structures, from different lacquers.

23. Method for producing a transfer film comprising a carrier film (18) and a transfer layer with a structure layer (14), said transfer layer being arranged on the carrier film (18) and being releasable from the carrier film (18),
**characterized**
**in that** a master relief structure (18m) is impressed into the carrier film (18), in that the structure layer (14) is applied to the carrier film (18), wherein a relief structure (14o) complementary to the master relief structure (18m) of the carrier film (18) is impressed into the structure layer (14), wherein the complementary relief structure (14o) comprises a microstructure, and in that the complementary relief structure (14o) is fixed by solidification or curing of the structure layer (14), wherein the structure layer (14) is formed with a thickness of < 20 µm.

24. Method according to Claim 23,
**characterized**
**in that** the master relief structure (18m) is introduced into the carrier film (18) by embossing.

25. Method according to Claim 23 or 24,
**characterized**
**in that** a replication layer is applied to the carrier film (18) and the master relief structure (18m) is impressed into the replication layer.

26. Method according to any of Claims 23 to 25, **characterized**
**in that** a release layer and/or a protective layer are/is applied to the carrier film (18) before the structure layer (14) is applied.

27. Method according to any of Claims 23 to 26, **characterized**
**in that** an adhesive layer (16) is applied to the structure layer (14).

28. Method according to any of Claims 23 to 27, **characterized**
**in that** the structure layer (14) is formed from different lacquers of the group comprising thermoplastic lacquer, thermally cured lacquer and lacquer cured by means of UV radiation.

29. Method according to any of Claims 23 to 28, **characterized**
**in that** the structure layer (14), on its side facing the carrier film, is formed locally, more particularly in register with different complementary relief structures (14o), from different lacquers.

30. Multilayer body comprising a structure layer (14), wherein the structure layer (14) forms a front side of the multilayer body and is formed by means of a transfer film according to any of Claims 1 to 22, wherein the complementary relief structure (14o) is impressed into a first surface of the structure layer (14), said first surface forming the front side of the multilayer body, and wherein the structure layer (14) is transparent and has a thickness of < 20 µm.

31. Multilayer body according to Claim 30, **characterized**
**in that** the structure layer (14) is formed from different lacquers of the group comprising thermoplastic lacquer, thermally cured lacquer and lacquer cured by means of UV radiation.

32. Multilayer body according to either of Claims 30 and 31,
**characterized**
**in that** the first surface is formed locally from different lacquers, more particularly in register with different complementary relief structures (14o).

## Revendications

1. Feuille de transfert, en particulier feuille estampée à chaud qui comporte une feuille support (18) et une couche de transfert disposée sur la feuille support (18) et détachable de celle-ci, avec une couche structurée, **caractérisée en ce qu'**une structure en relief maître (18m) est formée sur la feuille support (18) sur son côté tourné vers la couche structurée (14) et **en ce que** la couche structurée (14) présente, sur son côté tourné vers la feuille support (18), une structure en relief (14o) complémentaire à la structure en relief maître de la feuille support (18), la structure en relief (14o) complémentaire comportant une microstructure et la couche structurée présentant une épaisseur < à 20 µm.

2. Feuille de transfert selon la revendication 1, **caractérisée en ce que** la feuille support (18) présente une couche de laque de réplication, dans laquelle la structure en relief maître (18m) est formée.

3. Feuille de transfert selon l'une quelconque des revendications précédentes, **caractérisée en ce que** la couche structurée (14) est réalisée de manière transparente.

4. Feuille de transfert selon l'une quelconque des revendications précédentes, **caractérisée en ce qu'**une couche détachable est disposée entre la feuille support (18) et la couche de transfert.

5. Feuille de transfert selon l'une quelconque des revendications précédentes, **caractérisée en ce qu'**une couche de protection est réalisée sur la structure en relief (14o).

6. Feuille de transfert selon l'une quelconque des revendications précédentes, **caractérisée en ce que** la structure en relief comporte encore une macrostructure, outre la microstructure.

7. Feuille de transfert selon l'une quelconque des revendications précédentes, **caractérisée en ce que** la profondeur de la structure en relief (14o) est réalisée sensiblement comme une fonction des coordonnées x ou y qui varie périodiquement dans le sens x et/ou y.

8. Feuille de transfert selon l'une quelconque des revendications précédentes, **caractérisée en ce que** la profondeur de la structure en relief (14o) est réalisée sensiblement comme une fonction rectangulaire des coordonnées x ou y qui varie périodiquement dans le sens x ou y.

9. Feuille de transfert selon l'une quelconque des revendications précédentes, **caractérisée en ce que** la profondeur de la structure en relief (14o) est réalisée comme une fonction en dent de scie des coordonnées x ou y qui varie périodiquement dans le sens x ou y.

10. Feuille de transfert selon l'une quelconque des revendications précédentes, **caractérisée en ce que** la structure en relief (14o) est réalisée avec un rapport profondeur/largeur > à 2.

11. Feuille de transfert selon l'une quelconque des revendications précédentes, **caractérisée en ce que** la structure en relief (14o) est formée par superposition d'une microstructure à une macrostructure.

12. Feuille de transfert selon la revendication 11, **caractérisée en ce que** la macrostructure est réalisée comme une fonction des coordonnées x et/ou y qui varie périodiquement la profondeur de la macrostructure (14o) dans le sens x et/ou y.

13. Feuille de transfert selon la revendication 12, **caractérisée en ce que** la macrostructure présente des élévations réparties au hasard.

14. Feuille de transfert selon l'une quelconque des revendications 11 à 12, **caractérisée en ce que** la distance entre deux élévations contigües de la macrostructure est comprise entre 5 et 55 µm.

15. Feuille de transfert selon l'une quelconque des revendications 11 à 14, **caractérisée en ce que** le rapport profondeur/largeur de la microstructure est > à 1.

16. Feuille de transfert selon l'une quelconque des revendications précédentes, **caractérisée en ce que** des élévations de la structure en relief (14o) sont réalisées comme des microlentilles présentant un diamètre compris entre 3 et 80 µm, en particulier un diamètre compris entre 5 et 50 µm.

17. Feuille de transfert selon la revendication 16, **caractérisée en ce que** les microlentilles sont réalisées avec un indice de réfraction augmentant ou diminuant du bord au centre de la microlentille.

18. Feuille de transfert selon la revendication 16, **caractérisée en ce que** les microlentilles sont réalisées comme des lentilles de Fresnel.

19. Feuille de transfert selon l'une quelconque des revendications précédentes, **caractérisée en ce que** la structure en relief (14o) est réalisée de manière à résister aux salissures, la distance entre deux élévations de la structure en relief étant < à 5 µm, le rapport profondeur/largeur étant > à 2 et la couche structurée étant réalisée de manière hydrophobe et/ou oléophobe.

20. Feuille de transfert selon l'une quelconque des revendications précédentes, **caractérisée en ce que** la couche structurée (14) est réalisée comme un élément structurel optique ou comme une partie d'un élément structurel optique.

21. Feuille de transfert selon l'une quelconque des revendications précédentes, **caractérisée en ce que** la couche structurée (14) est constituée de différentes laques du groupe de laques comprenant la laque thermoplastique, la laque à durcissement thermique et la laque à durcissement par rayonnement ultraviolet.

22. Feuille de transfert selon l'une quelconque des revendications précédentes, **caractérisée en ce que** la couche structurée est constituée localement, en particulier en registre avec différentes structures en relief, de différentes laques sur son côté tourné vers la feuille support.

23. Procédé de fabrication d'une feuille de transfert qui comporte une feuille support (18) et une couche de transfert disposée sur la feuille support (18) et détachable de celle-ci, avec une couche structurée (14), **caractérisé en ce qu'**une structure en relief (18m) est formée dans la feuille support (18), **en ce que** la couche structurée (14) est appliquée sur la feuille support (18), une structure en relief (14o) complémentaire à la structure en relief maître (18m) de la feuille de transfert (18) étant formée dans la couche structurée (14), la structure en relief (14o) complémentaire comportant une microstructure et **en ce que** la structure en relief (14o) complémentaire est fixée par consolidation ou durcissement de la couche structurée (14), la couche structurée (14) étant réalisée dans une épaisseur < à 20 µm.

24. Procédé selon la revendication 23, **caractérisé en ce que** la structure en relief maître (18m) est réalisée par estampage dans la feuille support (18).

25. Procédé selon la revendication 23 ou 24, **caractérisé en ce qu'**une couche de réplication est appliquée sur la feuille support (18) et **en ce que** la structure en relief maître (18m) est formée dans la couche de réplication.

26. Procédé selon l'une quelconque des revendications 23 à 25, **caractérisé en ce qu'**une couche détachable et/ou une couche de protection est ou sont appliquées sur la feuille support (18) avant l'application de la couche structurée (14).

27. Procédé selon l'une quelconque des revendications 23 à 26, **caractérisé en ce qu'**une couche de colle (16) est appliquée sur la couche structurée (14).

28. Procédé selon l'une quelconque des revendications 23 à 27, **caractérisé en ce que** la couche structurée (14) est constituée de différentes laques du groupe de laques comprenant la laque thermoplastique, la laque à durcissement thermique et la laque à durcissement par rayonnement ultraviolet.

29. Procédé selon l'une quelconque des revendications 23 à 28, **caractérisé en ce que** la couche structurée (14) est constituée localement, en particulier en registre avec différentes structures en relief complémentaires (14o), de différentes laques sur son côté tourné vers la feuille support.

30. Corps multicouche doté d'une couche structurée (14), la couche structurée (14) constituant un côté avant du corps multicouche et étant formée par une feuille de transfert selon l'une quelconque des revendications 1 à 22, la structure en relief (14o) complémentaire étant formée dans une première surface, constituant le côté avant du corps multicouche, de la couche structurée (14) et la couche structurée (14) étant transparente et présentant une épaisseur < à 20 µm.

31. Corps multicouche selon la revendication 30, **caractérisé en ce que** la couche structurée (14) est constituée de différentes laques du groupe de laques comprenant la laque thermoplastique, la laque à durcissement thermique et la laque à durcissement par rayonnement ultraviolet.

32. Corps multicouche selon l'une quelconque des revendications 30 ou 31, **caractérisé en ce que** la première surface est constituée localement, en particulier en registre avec différentes structures en relief (14o) complémentaires, de différentes laques.
